# EUROPÄISCHE PATENTSCHRIFT

(11) **EP 0 810 232 B1**
(45) Veröffentlichungstag und Bekanntmachung des Hinweises auf die Patenterteilung: **25.07.2001**
(21) Anmeldenummer: 97108000.7
(22) Anmeldetag: 16.05.1997
(51) Int. Cl.: C08F 2/20, C08F 4/623, C08F 10/00, C08F 32/00, C08F 2/14, C08F 8/08

(54) **Verfahren zur Herstellung von kristallinen Polymerisaten durch Dispersionspolymerisation in Gegenwart von Metallocenkatalysatorsystemen**
Process for the preparation of crystalline polymers by dispersion polymerization using metallocene catalyst systems
Procédé pour la préparation de polyméres cristallins pour polymérisation en dispersion utilisant des systèmes catalytiques à base de métallocènes

(30) Priorität: 31.05.1996 DE 19621969
(43) Veröffentlichungstag der Anmeldung: 03.12.1997
(73) Patentinhaber: BASF AKTIENGESELLSCHAFT, 67056 Ludwigshafen (DE)
(72) Erfinder: Rösch, Joachim, Dr., 67069 Ludwigshafen (DE); Wünsch, Josef, Dr., 67105 Schifferstadt (DE)

(56) Entgegenhaltungen:
- EP-A- 0 295 026
- EP-A- 0 519 236
- EP-A- 0 563 917
- EP-A- 0 633 272
- EP-A- 0 700 935
- DE-A- 19 542 356
- DE-C- 4 344 672

## Beschreibung

Die vorliegende Erfindung betrifft Verfahren zur Herstellung von kristallinen Polymerisaten aus Ethylen, Propylen oder cyclischen Olefinen oder deren Mischungen.

Weiterhin betrifft die vorliegende Erfindung die Verwendung der hierbei erhältlichen Polymerisate zur Herstellung von funktionalisierten Verbindungen.

Polyolefinpartikel, die eine hohe Porosität besitzen, können aufgrund ihres Eigenschaftsprofils in vielen Bereichen Verwendung finden, beispielsweise als Adsorbens, Katalysatorträger, zur Herstellung von funktionalisierten Verbindungen und von Polymermischungen, indem die Poren mit weiteren Monomeren gefüllt werden und in den Poren auspolymerisiert wird.

Aus H.F. Herrmann und L.L. Böhm, Polymer Communications, 1991, Vol.32, S.58-61 ist ein Verfahren zur Herstellung von Polyethylenpartikeln durch Suspensionspolymerisation in Gegenwart von Metallocenkatalysatorsystemen bekannt. Hierbei werden jedoch nur Pulver mit einer kleinen Schüttdichte erhalten, die schlecht handhabbar sind und zu Staubexplosionen führen können.

In M. Antberg et al., Makromol. Chem., Macromol. Symp.48/49, Seite 333-347 (1991) ist ein Verfahren zur Herstellung von Polypropylenpartikeln durch Suspensionspolymerisation in Gegenwart von Metallocenkatalysatorsystemen bekannt. Durch eine spezielle Temperaturführung können Polypropylenpartikel mit einer höheren Schüttdichte erhalten werden. Allerdings weisen diese Partikel keinerlei Porosität mehr auf.

Aufgabe der vorliegenden Erfindung war es daher, ein Verfahren zur Herstellung von Polyolefinpartikeln, die eine hohe Porosität besitzen, gut handhabbar und staubfrei sind sowie eine enge Molekulargewichtsverteilung aufweisen zur Verfügung zu stellen. Weiterhin soll das Verfahren technisch einfach durchführbar sein.

Demgemäß wurden Verfahren zur Herstellung von kristallinen Polymerisaten aus Ethylen, Propylen oder cyclischen Olefinen oder deren Mischungen, gefunden, wobei man in Gegenwart von Metallocenkatalysatorsystemen in Dispersion polymerisiert.

Weiterhin wurde die Verwendung der hierbei erhältlichen Polymerisate zur Herstellung von funktionalisierten Verbindungen gefunden.

Bei dem erfindungsgemäßen Verfahren werden als Monomere Ethylen, Propylen oder cyclische Olefine, vorzugsweise mit 5 bis 12 C-Atomen wie Cyclopenten, Cyclohexen, Norbornen, oder deren Mischungen eingesetzt. Werden zwei oder mehrere Monomere eingesetzt, so sind Mischungen aus Ethylen und Cyclopenten sowie Ethylen und Norbornen besonders geeignet. Vorzugsweise werden jedoch Ethylen oder Propylen als Monomere eingesetzt, sodaß Homopolyethylene oder Homopropylene hergestellt werden.

Als Metallocenkatalysatorsysteme sind solche bevorzugt, die als aktive Bestandteile,
A) Metallocenkomplexe der allgemeinen Formel I 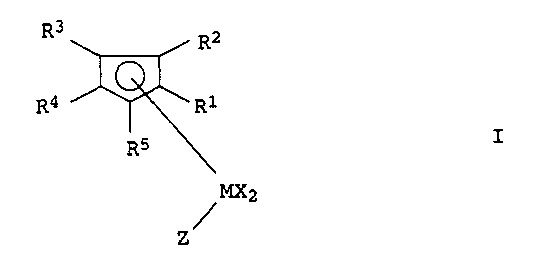 in der die Substituenten folgende Bedeutung haben:
   - M: Titan, Zirkonium, Hafnium, Vanadium, Niob oder Tantal
   - X: Fluor, Chlor, Brom, Iod, Wasserstoff, C₁- bis C₁₀-Alkyl, C₆- bis C₁₅-Aryl, Alkylaryl mit 1 bis 10 C-Atomen im Alkylrest und 6 bis 20 C-Atomen im Arylrest, -OR⁶ oder -NR⁶R⁷,
   wobei
   - R⁶ und R⁷: C₁- bis C₁₀-Alkyl, C₆- bis C₁₅-Aryl, Alkylaryl, Arylalkyl, Fluoralkyl oder Fluoraryl mit jeweils 1 bis 10 C-Atomen im Alkylrest und 6 bis 20 C-Atomen im Arylrest bedeuten,
   - R¹ bis R⁵: Wasserstoff, C₁- bis C₁₀-Alkyl, 5- bis 7-gliedriges Cycloalkyl, das seinerseits ein C₁- bis C₁₀-Alkyl als Substituent tragen kann, C₆- bis C₁₅-Aryl oder Arylalkyl, wobei gegebenenfalls auch zwei benachbarte Reste gemeinsam für 4 bis 15 C-Atome aufweisende gesättigte oder ungesättigte cyclische Gruppen stehen können oder Si(R⁸)₃ mit
   - R⁸: C₁- bis C₁₀-Alkyl, C₃- bis C₁₀-Cycloalkyl oder C₆- bis C₁₅-Aryl,
   - Z: für X oder 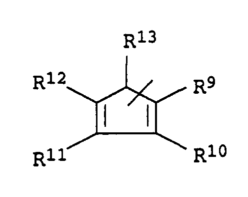 steht,
   wobei die Reste
   - R⁹ bis R¹³: Wasserstoff, C₁- bis C₁₀-Alkyl, 5- bis 7-gliedriges Cycloalkyl, das seinerseits ein C₁- bis C₁₀-Alkyl als Substituent tragen kann, C₆- bis C₁₅-Aryl oder Arylalkyl bedeuten und wobei gegebenenfalls auch zwei benachbarte Reste gemeinsam für 4 bis 15 C-Atome aufweisende gesättigte oder ungesättigte cyclische Gruppen stehen können, o'der Si(R¹⁴)₃ mit
   - R¹⁴: C₁- bis C₁₀-Alkyl, C₆- bis C₁₅-Aryl oder C₃- bis C₁₀-Cycloalkyl,
   oder wobei die Reste R⁴ und Z gemeinsam eine Gruppierung -R¹⁵-A-bilden, in der
   - R¹⁵: 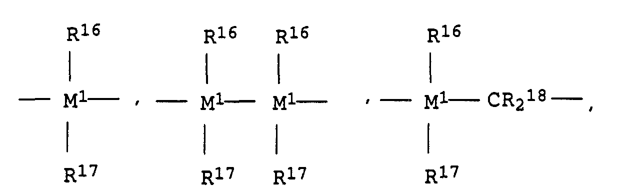 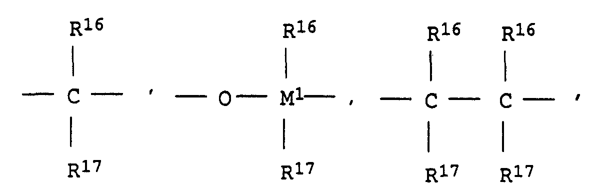
   = BR¹⁶, = AlR¹⁶, -Ge-, -Sn-, -O-, -S-, = SO, = SO₂, = NR¹⁶, = CO, = PR¹⁶ oder = P(O)R¹⁶ ist,
   wobei
   - R¹⁶, R¹⁷ und R¹⁸: gleich oder verschieden sind und ein Wasserstoffatom, ein Halogenatom, eine C₁-C₁₀-Alkylgruppe, eine C₁-C₁₀-Fluoralkylgruppe, eine C₆-C₁₀-Fluorarylgruppe, eine C₆-C₁₀-Arylgruppe, eine C₁-C₁₀-Alkoxygruppe, eine C₂-C₁₀-Alkenylgruppe, eine C₇-C₄₀-Arylalkylgruppe, eine C₈-C₄₀-Arylalkenylgruppe oder eine C₇-C₄₀-Alkylarylgruppe bedeuten oder wobei zwei benachbarte Reste jeweils mit den sie verbindenden Atomen einen Ring bilden, und
   - M¹: Silicium, Germanium oder Zinn ist,
   - A: ―O―, ―S―, 〉NR¹⁹ oder 〉PR¹⁹ bedeuten,
   mit
   - R¹⁹: C₁- bis C₁₀-Alkyl, C₆- bis C₁₅-Aryl, C₃- bis C₁₀-Cycloalkyl, Alkylaryl oder Si(R²⁰)₃,
   - R²⁰: Wasserstoff, C₁- bis C₁₀-Alkyl, C₆- bis C₁₅-Aryl, das seinerseits mit C₁- bis C₄-Alkylgruppen substituiert sein kann oder C₃- bis C₁₀-Cycloalkyl
   oder wobei die Reste R⁴ und R⁸ gemeinsam eine Gruppierung -R¹⁵-bilden
   und
B) eine metalloceniumionenbildende Verbindung
enthalten.

Von den Metallocenkomplexen der allgemeinen Formel I sind 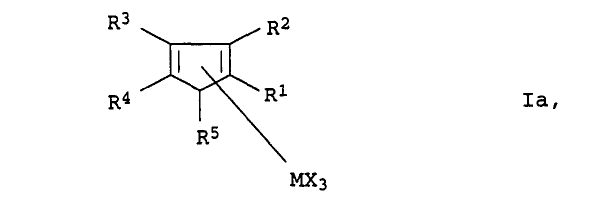 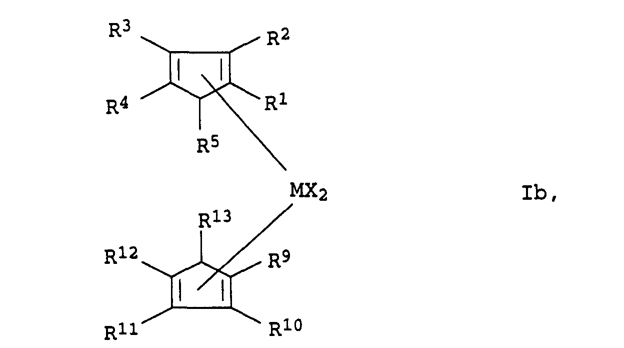 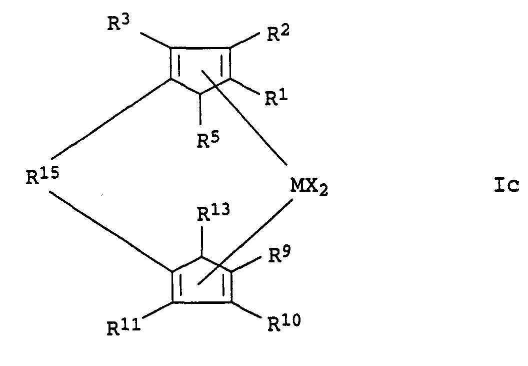 und 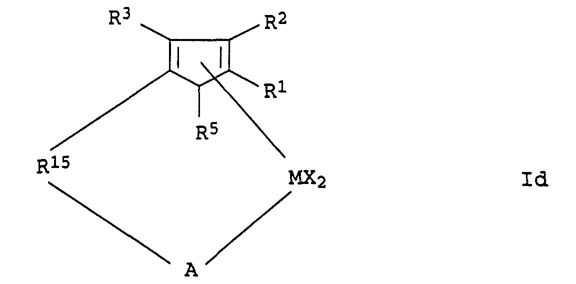 bevorzugt.

Die Reste X können gleich oder verschieden sein, bevorzugt sind sie gleich.

Von den Verbindungen der Formel Ia sind insbesondere diejenigen bevorzugt, in denen
- M: Titan, Zirkonium oder Hafnium,
- X: Chlor, C₁-bis C₄-Alkyl oder Phenyl und
- R¹ bis R⁵: Wasserstoff oder C₁- bis C₄-Alkyl bedeuten.

Von den Verbindungen der Formel Ib sind als bevorzugt diejenigen zu nennen, bei denen
- M: für Titan, Zirkonium oder Hafnium steht,
- X: für Chlor, C₁-bis C₄-Alkyl oder Phenyl,
- R¹ bis R⁵: Wasserstoff, C₁- bis C₄-Alkyl oder Si(R⁸)₃,
- R⁹ bis R¹³: Wasserstoff, C₁- bis C₄-Alkyl oder Si(R¹⁴)₃ bedeuten.

Insbesondere sind die Verbindungen der Formel Ib geeignet, in denen die Cyclopentadienylreste gleich sind.

Beispiele für besonders geeignete Verbindungen sind u.a.:
Bis(cyclopentadienyl)zirkoniumdichlorid,
Bis(pentamethylcyclopentadienyl)-zirkoniumdichlorid,
Bis(methylcyclopentadienyl)-zirkoniumdichlorid,
Bis(ethylcyclopentadienyl)-zirkoniumdichlorid,
Bis(n-butylcyclopentadienyl)-zirkoniumdichlorid und
Bis (trimethylsilylcyclopentadienyl)-zirkoniumdichlorid
sowie die entsprechenden Dimethylzirkoniumverbindungen.

Von den Verbindungen der Formel Ic sind diejenigen besonders geeignet, in denen
- R¹ und R⁹: gleich sind und für Wasserstoff oder C₁- bis C₁₀-Alkylgruppen stehen,
- R⁵ und R¹³: gleich sind und für Wasserstoff, eine Methyl-, Ethyl-, iso-Propyl- oder tert.-Butylgruppe stehen
- R², R³, R¹⁰ und R¹¹: die Bedeutung
R³ und R¹¹ C₁- bis C₄-Alkyl
R² und R¹⁰ Wasserstoff
haben oder zwei benachbarte Reste R² und R³ sowie R¹⁰ und R¹¹ gemeinsam für 4 bis 12 C-Atome aufweisende cyclische Gruppen stehen,
- R¹⁵: für 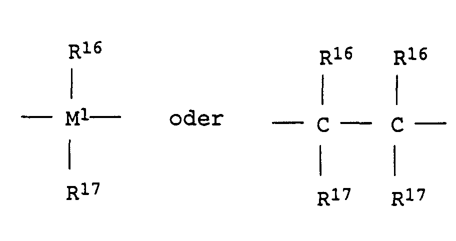 steht,
- M: für Titan, Zirkonium oder Hafnium und
- X: für Chlor, C₁-bis C₄-Alkyl oder Phenyl stehen.

Beispiele für besonders geeignete Komplexverbindungen sind u.a.
Dimethylsilandiylbis(cyclopentadienyl)-zirkoniumdichlorid,
Dimethylsilandiylbis(indenyl)-zirkoniumdichlorid,
Dimethylsilandiylbis(tetrahydroindenyl)-zirkoniumdichlorid,
Ethylenbis(cyclopentadienyl)-zirkoniumdichlorid,
Ethylenbis(indenyl)-zirkoniumdichlorid,
Ethylenbis (tetrahydroindenyl)-zirkoniumdichlorid,
Tetramethylethylen-9-fluorenylcyclopentadienylzirkoniumdichlorid,
Dimethylsilandiylbis(-3-tert.butyl-5-methylcyclopentadienyl)-zirkoniumdichlorid,
Dimethylsilandiylbis(-3-tert.butyl-5-ethylcyclopentadienyl)-zirkoniumdichlorid,
Dimethylsilandiylbis(-2-methylindenyl)-zirkoniumdichlorid,
Dimethylsilandiylbis(-2-isopropylindenyl)-zirkoniumdichlorid,
Dimethylsilandiylbis(-2-tert.butylindenyl)-zirkoniumdichlorid,
Diethylsilandiylbis(-2-methylindenyl)-zirkoniumdibromid,
Dimethylsilandiylbis(-3-methyl-5-methylcyclopentadienyl)-zirkoniumdichlorid,
Dimethylsilandiylbis(-3-ethyl-5-isopropylcyclopentadienyl)-zirkoniumdichlorid,
Dimethylsilandiylbis(-2-methylindenyl)-zirkoniumdichlorid,
Dimethylsilandiylbis(-2-methylbenzindenyl)-zirkoniumdichlorid
Dimethylsilandiylbis(2-ethylbenzindenyl)zirkoniumdichlorid,
Methylphenylsilandiylbis(2-ethylbenzindenyl)zirkoniumdichlorid,
Methylphenylsilandiylbis(2-methylbenzindenyl)zirkoniumdichlorid,
Diphenylsilandiylbis(2-methylbenzindenyl)zirkoniumdichlorid,
Diphenylsilandiylbis(2-ethylbenzindenyl)zirkoniumdichlorid, und
Dimethylsilandiylbis(-2-methylindenyl)-hafniumdichlorid
sowie die entsprechenden Dimethylzirkoniumverbindungen.

Bei den Verbindungen der allgemeinen Formel Id sind als besonders geeignet diejenigen zu nennen, in denen
- M: für Titan oder Zirkonium,
- X: für Chlor, C₁-bis C₄-Alkyl oder Phenyl stehen.
- R¹⁵: für 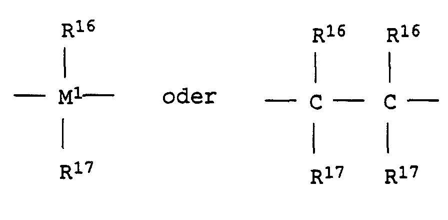 steht,
- A: für ―O―, ―S―, 〉NR¹⁹
und
- R¹ bis R³ und R⁵: für Wasserstoff, C₁- bis C₁₀-Alkyl, C₃- bis C₁₀-Cycloalkyl, C₆- bis C₁₅-Aryl oder Si(R⁸)₃ stehen, oder wobei zwei benachbarte Reste für 4 bis 12 C-Atome aufweisende cyclische Gruppen stehen.

Die Synthese derartiger Komplexverbindungen kann nach an sich bekannten Methoden erfolgen, wobei die Umsetzung der entsprechend substituierten, cyclischen Kohlenwasserstoffanionen mit Halogeniden von Titan, Zirkonium, Hafnium, Vanadium, Niob oder Tantal, bevorzugt ist.

Beispiele für entsprechende Herstellungsverfahren sind u.a. im Journal of Organometallic Chemistry, 369 (1989), 359-370 beschrieben.

Es können auch Mischungen verschiedener Metallocenkomplexe eingesetzt werden.

Als Komponente B) enthält das bei dem erfindungsgemäßen Verfahren eingesetzte Katalysatorsystem eine metalloceniumionenbildende Verbindung.

Geeignete metalloceniumionenbildende Verbindungen sind starke, neutrale Lewissäuren, ionische Verbindungen mit lewissauren Kationen und ionische Verbindungen mit Brönsted-Säuren als Kation.

Als starke, neutrale Lewissäuren sind Verbindungen der allgemeinen Formel IV

M²X¹X²X³ IV

bevorzugt, in der
- M²: ein Element der III. Hauptgruppe des Periodensystems bedeutet, insbesondere B, Al oder Ga, vorzugsweise B,
- X¹, X² und X³: für Wasserstoff, C1- bis C10-Alkyl, C6- bis C15-Aryl, Alkylaryl, Arylalkyl, Halogenalkyl oder Halogenaryl mit jeweils 1 bis 10 C-Atomen im Alkylrest und 6 bis 20 C-Atome im Arylrest oder Fluor, Chlor, Brom oder Jod stehen, insbesondere für Halogenaryle, vorzugsweise für Pentafluorphenyl.

Besonders bevorzugt sind Verbindungen der allgemeinen Formel IV, in der X¹, X² und X³ gleich sind, vorzugsweise Tris(pentafluorphenyl)boran.

Als ionische Verbindungen mit lewissauren Kationen sind Verbindungen der allgemeinen Formel V

[(Y^{a+})Q₁Q₂...Q_{z}]^{d+} V

geeignet, in denen
- Y: ein Element der I. bis VI. Hauptgruppe oder der I. bis VIII. Nebengruppe des Periodensystems bedeutet,
- Q₁ bis Q_{z}: für einfach negativ geladene Reste wie C₁- bis C₂₈-Alkyl, C₆- bis C₁₅-Aryl, Alkylaryl, Arylalkyl, Halogenalkyl, Halogenaryl mit jeweils 6 bis 20 C-Atomen im Aryl- und 1 bis 28 C-Atome im Alkylrest, C₁- bis C₁₀-Cycloalkyl, welches gegebenenfalls mit C₁- bis C₁₀-Alkylgruppen substituiert sein kann, Halogen, C₁- bis C₂₈-Alkoxy, C₆- bis C₁₅-Aryloxy, Silyl- oder Mercaptylgruppen
- a: für ganze Zahlen von 1 bis 6 steht
- z: für ganze Zahlen von 0 bis 5
- d: der Differenz a-z entspricht, wobei d jedoch größer oder gleich 1 ist.

Besonders geeignet sind Carboniumkationen, Oxoniumkationen und Sulfoniumkationen sowie kationische Übergangsmetallkomplexe. Insbesondere sind das Triphenylmethylkation, das Silberkation und das 1,1'-Dimethylferrocenylkation zu nennen. Bevorzugt besitzen sie nicht koordinierende Gegenionen, insbesondere Borverbindungen, wie sie auch in der WO 91/09882 genannt werden, bevorzugt Tetrakis(pentafluorophenyl)borat.

Ionische Verbindungen mit Brönsted-Säuren als Kationen und vorzugsweise ebenfalls nicht koordinierende Gegenionen sind in der WO 91/09882 genannt, bevorzugtes Kation ist das N,N-Dimethylanilinium.

Die Menge an metalloceniumionenbildenden Verbindungen beträgt bevorzugt 0,1 bis 10 Äquivalente, bezogen auf den Metallocenkomplex IV.

Besonders geeignet als metalloceniumionenbildende Verbindung B) sind offenkettige oder cyclische Alumoxanverbindungen der allgemeinen Formel II oder III 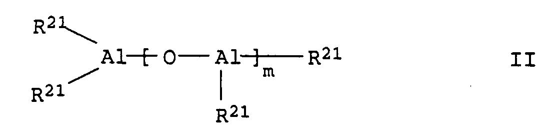 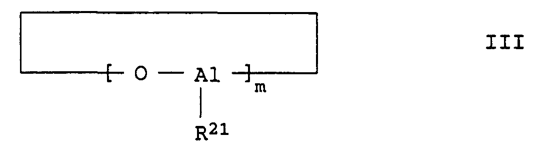 wobei
- R²¹: eine C₁- bis C₄-Alkylgruppe bedeutet, bevorzugt Methyl- oder Ethylgruppe und m für eine ganze Zahl von 5 bis 30, bevorzugt 10 bis 25 steht.

Die Herstellung dieser oligomeren Alumoxanverbindungen erfolgt üblicherweise durch Umsetzung einer Lösung von Trialkylaluminium mit Wasser und ist u.a. in der EP-A 284 708 und der US A 4,794,096 beschrieben.

In der Regel liegen die dabei erhaltenen oligomeren Alumoxanverbindungen als Gemische unterschiedlich langer, sowohl linearer als auch cyclischer Kettenmoleküle vor, so daß m als Mittelwert anzusehen ist. Die Alumoxanverbindungen können auch im Gemisch mit anderen Metallalkylen, bevorzugt mit Aluminiumalkylen vorliegen.

Vorzugsweise werden sowohl die Metallocenkomplexe (Komponente A) als auch die metalloceniumionenbildende Verbindungen (Komponente B) in Lösung eingesetzt, wobei aromatische Kohlenwasserstoffe mit 6 bis 20 C-Atomen, insbesondere Xylole und Toluol, besonders bevorzugt sind.

Weiterhin können als Komponente B) Aryloxyalumoxane, wie in der US-A 5,391,793 beschrieben, Aminoaluminoxane, wie in der US-A 5,371,260 beschrieben, Aminoaluminoxanhydrochloride, wie in der EP-A 633 264 beschrieben, Siloxyaluminoxane, wie in der EP-A 621 279 beschrieben, oder Mischungen daraus eingesetzt werden.

Es hat sich als vorteilhaft erwiesen, die Metallocenkomplexe und die oligomere Alumoxanverbindung in solchen Mengen zu verwenden, daß das atomare Verhältnis zwischen Aluminium aus der oligomeren Alumoxanverbindung und dem Übergangsmetall aus den Metallocenkomplexen im Bereich von 10:1 bis 10⁶:1, insbesondere im Bereich von 10:1 bis 10⁴:1, liegt.

Das erfindungsgemäße Verfahren wird als Dispersionspolymerisation durchgeführt. Als Dispergierhilfsmittel werden Styrol-Dien-Zweiblockcopolymere oder Styrol-Dien-Styrol- Dreiblockcopolymere verwendet, und als Dispergiermedium sind aliphatische Kohlenwasserstoffe bevorzugt.

Vorzugsweise wird das Dispergierhilfsmittel in einer Menge von 0,5 bis 5 Gew.-%, bezogen auf die eingesetzte Menge an Monomeren verwendet. Zweckmäßig wird es in aromatischen Kohlenwasserstoffen wie Toluol oder Ethylbenzol gelöst.

Geeignete Zweiblockcopolymere können aus einem Polymerblock aus Styrol und einem Polymerblock aus Butadien, bevorzugt 1,4-Polybutadien, bestehen. Die Summe der Gew.-% der Blöcke aus Styrol und aus Butadien beträgt 100, wobei die Zusammensetzung variieren kann. Der Styrolblock kann 10 bis 90 Gew.-%, bevorzugt 20 bis 80 Gew.-% ausmachen, entsprechend der Butadienblock 90 bis 10 Gew.-%, vorzugsweise 80 bis 20 Gew.-%. Geeignet sind auch Styrol-Butadien-Zweiblockcopolymere, die hydriert sein können.

Von den Styrol-Dien-Styrol-Dreiblockcopolymeren eignen sich beispielsweise solche, bei denen der Dien-Block aus Polybutadien oder Polyisopren besteht und wobei der Dien-Block hydriert oder unhydriert sein kann.

Zweiblock- und Dreiblockcopolymere sowie Verfahren zu ihrer Herstellung sind an sich bekannt und beispielsweise in Thermoplastic Elastomers (1987), N.R. Legge et al (ed.) beschrieben. Geeignete Copolymere sind auch im Handel erhältlich, beispielsweise Kraton® (Fa. Shell).

Von den aliphatischen Kohlenwasserstoffen, die als Dispergiermedium eingesetzt werden können, sind solche mit 4 bis 10 C-Atomen besonders geeignet, beispielsweise Butan, Pentan, Hexan und Heptan oder Kohlenwasserstoffgemische.

Bevorzugt geht man bei dem erfindungsgemäßen Verfahren so vor, daß man das Dispergiermedium und gegebenenfalls das Lösungsmittel für das Dispergierhilfsmittel vorlegt und das Dispergierhilfsmittel dann zugibt. Hierzu gibt man dann das Metallocenkatalysatorsystem, vorzugsweise in Toluol. Anschließend leitet man die Monomeren ein. Nach beendeter Reaktion wird das entstandene kristalline Polymerisat abgetrennt, vorzugsweise mechanisch, beispielsweise durch Filtration und getrocknet. Das Filtrat enthält den aktiven Metallocenkomplex und kann für weitere Polymerisationen eingesetzt werden.

Die Polymerisation wird vorzugsweise bei Temperaturen im Bereich von -50 bis 180°C, insbesondere von 0 bis 150°C und Drücken im Bereich von 0,5 bis 100 bar, insbesondere von 1 bis 50 bar durchgeführt. Die Polymerisationszeiten liegen vorzugsweise im Bereich von 0,1 bis 24 Stunden, insbesondere von 0,2 bis 10 Stunden.

Das erfindungsgemäße Verfahren ist technisch einfach durchführbar und kann bis zu hohen Feststoffgehalten (bis zu 50 %) durchgeführt werden, ohne daß der Reaktor verstopft. Die nach dem erfindungsgemäßen Verfahren hergestellten kristallinen Polymerisate besitzen eine hohe Porosität und bleiben während der Polymerisation ohne Verklumpen im Reaktor dispergiert, sind jedoch als Feststoff gut handhabbar und staubfrei. Weiterhin weisen sie eine enge Molekulargewichtsverteilung auf.

Die nach dem erfindungsgemäßen Verfahren hergestellten kristallinen Polymerisate weisen BET-Oberflächen im Bereich von 0,5 m²/g bis 50 m²/g, vorzugsweise 1 bis 20 m²/g auf und eignen sich zur Herstellung von funktionalisierten Verbindungen. Die Bestimmung der BET-Oberfläche erfolgt durch Messung der N₂-Adsorption bei tiefen Temperaturen, wie in J.Colloid Interphase Sci. (1985), 103, 112 beschrieben.

Unter funktionalen Verbindungen werden solche Verbindungen verstanden, die funktionelle Gruppen wie Hydroxyl-, Amin- und insbesondere Epoxidgruppen aufweisen.

Ein bevorzugtes Verfahren zur Herstellung von solchen Epoxiden kann so durchgeführt werden, daß das nach dem erfindungsgemäßen Verfahren hergestellte kristalline Polymerisat mit einem Epoxidierungsreagens wie Chlorperbenzoesäure in Suspension umgesetzt wird. Die molare Menge an Epoxidierungsreagens zu Polymerisat liegt vorzugsweise im Bereich von 20:1 bis 1:1, als Suspensionsmittel sind Diethylether, Tetrahydrofuran und Methylenchlorid geeignet, insbesondere Diethylether. Die Reaktionszeit liegt vorzugsweise im Bereich von 0,5 bis 100 Stunden, die Temperaturen im Bereich von 0 bis 90°C und die Drücke im Bereich von 0,5 bis 5 bar. Anschließend wird das entstandene Produkt abgetrennt.

Die Herstellung von funktionalisierten Verbindungen aus den nach dem erfindungsgemäßen Verfahren erhältlichen kristallinen Polymerisaten ist technisch einfach durchführbar.

### Beispiele

### Beispiele 1 und 2: Herstellung von Polypropylen (PP)

### Beispiel 1:

In einem 1 l-Kolben mit Rückflußkühler wurden 500 ml Pentan und 20 ml Ethylbenzol bei Raumtemperatur vorgelegt und 3,5 g (1 Gew.-%) eines handelsüblichen hydrierten Styrol-Butadien-Styrol Triblockcopolymeren (Kraton® G 1652 der Fa. Shell Chemicals mit einem Styrolgehalt von 29 Gew.-%) darin gelöst. Zu dieser Lösung wurden 0,2 mmol (82 mg) Ethylidenbisindenylzirkondichlorid gelöst in 58 ml einer 1,7 molaren toluolischen Methylalumoxanlösung (Fa. Witco) gegeben. Dann wurden 4 h Propen bei Normaldruck eingeleitet. Die Temperatur der Reaktionsmischung stieg auf 36°C (Siedepunkt der Pentan-Ethylbenzolmischung). Nach beendeter Reaktion wurde das Polypropylenpulver mit einer Glasfritte unter Stickstoffschutzgas abfiltriert und im Vakuumtrockenschrank bei 50°C 12 h getrocknet. Das Filtrat enthielt den orangegefärbten aktiven Metallocenkomplex und konnte für eine weitere Polymerisation eingesetzt werden.

Man erhielt 320 g isotaktisches Polypropylen (Smp.: 142°C, Mₙ (Gelpermeationschromatographie bei 135°C in Trichlorbenzol) 7800 g/mol, M_{w}/Mₙ = 1,9).

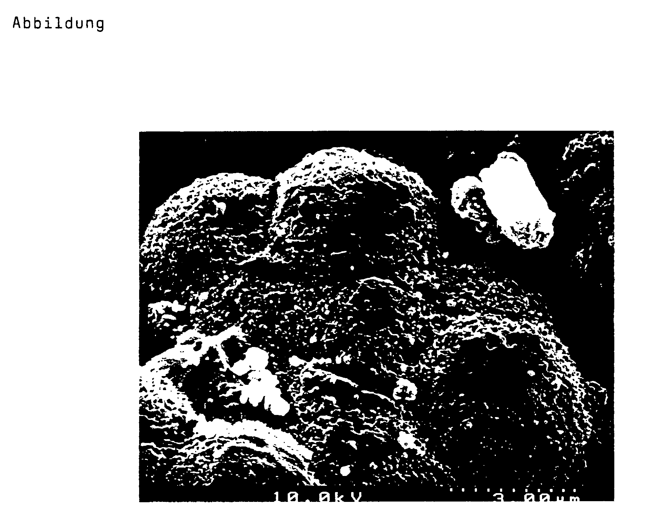

Partikelgröße (Rasterelektronenmikroskopische Aufnahme Abb.1): Es bildeten sich Agglomerate von 200-600 µm, die sich aus Primärpartikeln von 10-30 µm zusammensetzten. Die Partikel selbst wiesen Poren von ca. 0,1 µm auf .

Die Schüttdichte des Pulvers betrug 0,37 kg/l, die BET-Oberfläche 5,8 m²/g.

### Beispiel 2:

In einem 1 1-Rührautoklaven wurden 600 ml Pentan vorgelegt und 8,2 g (2 Gew.-%) eines handelsüblichen hydrierten Styrol-Butadien-Styrol Triblockcopolymeren (Kraton® G 1652 der Fa. Shell Chemicals) darin gelöst. Dann wurden 85 g Propen einkondensiert und auf 50°C erwärmt. Es stellte sich ein Druck von 6 bar ein. Die Polymerisation wurde durch Zugabe von 0,05 mmol Ethylidenbisindenylzirkondichlorid (21 mg), gelöst in 14,7 ml 1,7 molarer toluolischer Methylalumoxanlösung (Al:Zr 500:1) gestartet. Der Reaktordruck sank durch die Polymerisation in 90 min auf 1,5 bar ab.

Die gebildete Dispersion mit 20 % Feststoffgehalt konnte über das Bodenablaßventil ausgetragen und anschließend filtriert werden.
Ausbeute: 80 g isotaktisches PP
Schüttdichte: 0,32 g/ml
BET-Oberfläche: 3,9 m²/g

### Vergleichsbeispiel V1:

Es wurde wie in Beispiel 1 gearbeitet, jedoch wurde kein Dispergierhilfsmittel zugegeben und als Dispergiermedium wurde reines Pentan verwendet.

Nach 1 h Reaktionszeit mußte der VErsuch abgebrochen werden, da der Kolben durch ausgefallenes PP-Pulver verklebt war.
Ausbeute: 85 g isotaktisches PP-Pulver

Rasterelektronenmikroskopische Aufnahme: Das Pulver bestand nur aus nicht agglomerierten Primärpartikeln mit Partikelgrößen von 10-40 µm.
Schüttdichte: 0,17 kg/l

### Beispiel 3: Epoxidierung von Polypropylen

100 g des porösen, isotaktischen PP aus Beispiel 1 wurden mit der 1,3 fachen molaren Menge (15,9 g) m-Chlorperbenzoesäure (70 %) mit 400 ml Diethylether in Suspension bei Raumtemperatur umgesetzt. Es wurde 96 h bei 50°C gerührt. Der Reaktionsverlauf konnte im IR verfolgt werden: Die Doppelbindungsbanden bei 910 und 3076 cm⁻¹ nahmen ab und bei 3040 cm⁻¹ bildete sich eine Epoxidbande. Nach Beendigung der Reaktion wurde vom Diethylether abfiltriert und mit Methanol extrahiert, bis die restliche m-Chlorperbenzoesäure entfernt war. Das restliche Methanol wurde im Vakuum entfernt.

Umsatz der Doppelbindungen zum Epoxid (nach Epoxidzahl,
DIN 16945): 72 %

### Vergleichsbeispiel V2:

100 g eines kompakten, porenlosen PP-Pulvers, erhalten durch Auflösen des PP aus Vergleichsbeispiel V1 in 1000 ml p-Xylol bei 130°C und anschließendem Ausfällen in Methanol (BET-Oberfläche: 0,01 m²/g) wurden wie in Beispiel 3 epoxidiert.

Umsatz der Doppelbindungen zum Epoxid (nach Epoxidzahl): 13 %.

## Patentansprüche

1. Verfahren zur Herstellung von kristallinen Polymerisaten aus Ethylen, Propylen oder cyclischen Olefinen oder deren Mischungen, wobei man in Gegenwart von Metallocenkatalysatorsystemen in Dispersion polymerisiert und als Dispergierhilfsmittel Styrol-Dien-Zweiblockcopolymere oder Styrol-Dien-Styrol-Dreiblockcopolymere verwendet.

2. Verfahren nach Anspruch 1, dadurch gekennzeichnet, daß Homopolymerisate des Ethylens oder des Propylens hergestellt werden.

3. Verfahren nach den Ansprüchen 1 bis 2, dadurch gekennzeichnet, daß man als Dispergiermedium aliphatische Kohlenwasserstoffe verwendet.

4. Verfahren nach den Ansprüchen 1 bis 3, dadurch gekennzeichnet, daß man als Metallocenkatalysatorsysteme solche verwendet, die als aktive Bestandteile
A) Metallocenkomplexe der allgemeinen Formel I 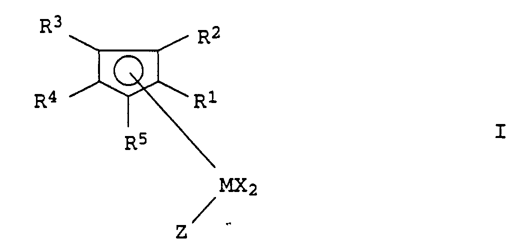 in der die Substituenten folgende Bedeutung haben:
M Titan, Zirkonium, Hafnium, Vanadium, Niob oder Tantal
X Fluor, Chlor, Brom, Iod, Wasserstoff, C₁- bis C₁₀-Alkyl, C₆- bis C₁₅-Aryl, Alkylaryl mit 1 bis 10 C-Atomen im Alkylrest und 6 bis 20 C-Atomen im Arylrest, -OR⁶ oder -NR⁶R⁷,
wobei
R⁶ und R⁷ C₁- bis C₁₀-Alkyl, C₆- bis C₁₅-Aryl, Alkylaryl, Arylalkyl, Fluoralkyl oder Fluoraryl mit jeweils 1 bis 10 C-Atomen im Alkylrest und 6 bis 20 C-Atomen im Arylrest bedeuten,
R¹ bis R⁵ Wasserstoff, C₁- bis C₁₀-Alkyl, 5- bis 7-gliedriges Cycloalkyl, das seinerseits ein C₁- bis C₁₀-Alkyl als Substituent tragen kann, C₆- bis C₁₅-Aryl oder Arylalkyl, wobei gegebenenfalls auch zwei benachbarte Reste gemeinsam für 4 bis 15 C-Atome aufweisende gesättigte oder ungesättigte cyclische Gruppen stehen können oder Si(R⁸)₃ mit
R⁸ C₁- bis C₁₀-Alkyl, C₃- bis C₁₀-Cycloalkyl oder C₆- bis C₁₅-Aryl,
Z für X oder 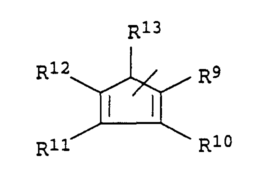 steht,
wobei die Reste
R⁹ bis R¹³ Wasserstoff, C₁- bis C₁₀-Alkyl, 5- bis 7-gliedriges Cycloalkyl, das seinerseits ein C₁- bis C₁₀-Alkyl als Substituent tragen kann, C₆- bis C₁₅-Aryl oder Arylalkyl bedeuten und wobei gegebenenfalls auch zwei benachbarte Reste gemeinsam für 4 bis 15 C-Atome aufweisende gesättigte oder ungesättigte cyclische Gruppen stehen können, oder Si(R¹⁴)₃ mit
R¹⁴ C₁- bis C₁₀-Alkyl, C₆- bis C₁₅-Aryl oder C₃- bis C₁₀-Cycloalkyl,
oder wobei die Reste R⁴ und Z gemeinsam eine Gruppierung -R¹⁵-A-bilden, in der
R¹⁵ 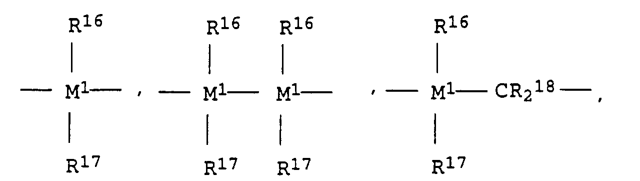 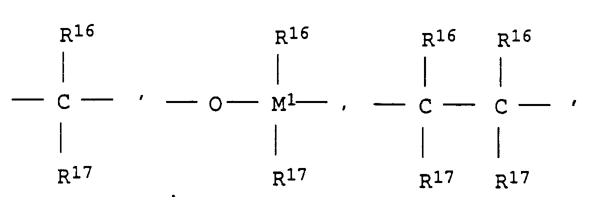
= BR¹⁶, = AlR¹⁶, -Ge-, -Sn-, -O-, -S-, = SO, = SO₂, = NR¹⁶, = CO, = PR¹⁶ oder = P(O)R¹⁶ ist,
wobei
R¹⁶, R¹⁷ und R¹⁸ gleich oder verschieden sind und ein Wasserstoffatom, ein Halogenatom, eine C₁-C₁₀-Alkylgruppe, eine C₁-C₁₀-Fluoralkylgruppe, eine C₆-C₁₀-Fluorarylgruppe, eine C₆-C₁₀-Arylgruppe, eine C₁-C₁₀-Alkoxygruppe, eine C₂-C₁₀-Alkenylgruppe, eine C₇-C₄₀-Arylalkylgruppe, eine C₈-C₄₀-Arylalkenylgruppe oder eine C₇-C₄₀-Alkylarylgruppe bedeuten oder wobei zwei benachbarte Reste jeweils mit den sie verbindenden Atomen einen Ring bilden, und
M¹ Silicium, Germanium oder Zinn ist,
A ―O― ―S―, 〉NR¹⁹ oder 〉PR¹⁹ bedeuten, mit
R¹⁹ C₁- bis C₁₀-Alkyl, C₆- bis C₁₅-Aryl, C₃- bis C₁₀-Cycloalkyl, Alkylaryl oder Si(R²⁰)₃,
R²⁰ Wasserstoff, C₁- bis C₁₀-Alkyl, C₆- bis C₁₅-Aryl, das seinerseits mit C₁- bis C₄-Alkylgruppen substituiert sein kann oder C₃- bis C₁₀-Cycloalkyl
oder wobei die Reste R⁴ und R⁸ gemeinsam eine Gruppierung -R¹⁵-bilden und
B) eine metalloceniumionenbildende Verbindung
enthalten.

5. Verfahren nach den Ansprüchen 1 bis 4, dadurch gekennzeichnet, daß als metalloceniumionenbildende Verbindung B) offenkettige oder cyclische Alumoxanverbindungen der allgemeinen Formel II oder III 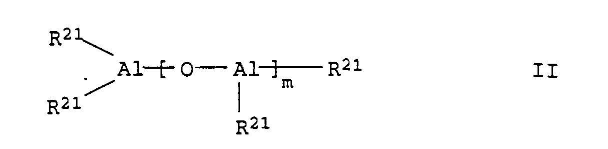 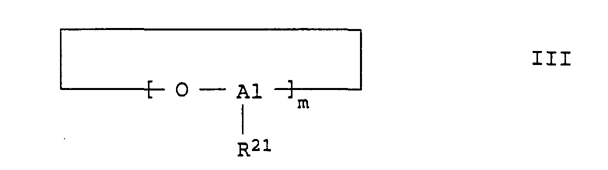 wobei
R²¹ eine C₁- bis C₄-Alkylgruppe bedeutet und m für eine ganze Zahl von 5 bis 30 steht,
eingesetzt werden.

6. Verwendung der gemäß den Ansprüchen 1 bis 5 hergestellten kristallinen Polymerisate zur Herstellung von funktionalisierten Verbindungen.

7. Verwendung nach Anspruch 6 zur Herstellung von Epoxiden.

## Claims

1. A process for the preparation of crystalline polymers of ethylene, propylene or cyclic olefins or mixtures thereof, wherein polymerization is carried out in the presence of a metallocene catalyst system in emulsion and the dispersant used is a styrene/diene two-block copolymer or a styrene/diene/styrene three-block copolymer.

2. A process as claimed in claim 1, wherein homopolymers of ethylene or of propylene are prepared.

3. A process as claimed in either of claims 1 and 2, wherein the dispersing medium used is an aliphatic hydrocarbon.

4. A process as claimed in any of claims 1 to 3, wherein the metallocene catalyst system used is one which contains, as active components,
A) metallocene complexes of the formula I 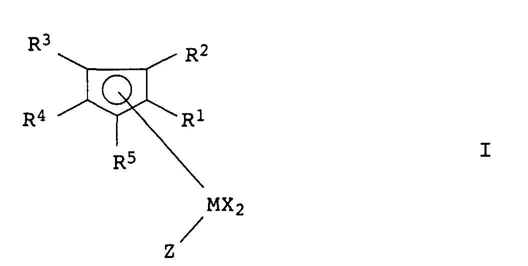 where:
M is titanium, zirconium, hafnium, vanadium, niobium or tantalum,
X is fluorine, chlorine, bromine, iodine, hydrogen, C₁-C₁₀-alkyl, C₆-C₁₅-aryl, alkylaryl having 1 to 10 carbon atoms in the alkyl radical and 6 to 20 carbon atoms in the aryl radical, -OR⁶ or -NR⁶R⁷,
R⁶ and R⁷ are each C₁-C₁₀-alkyl, C₆-C₁₅-aryl, alkylaryl, arylalkyl, fluoroalkyl or fluoroaryl, each having 1 to 10 carbon atoms in the alkyl radical and 6 to 20 carbon atoms in the aryl radical,
R¹ to R⁵ are each hydrogen, C₁-C₁₀-alkyl, 5- to 7-membered cycloalkyl, which in turn may carry C₁-C₁₀-alkyl as a substituent, C₆-C₁₅-aryl or arylalkyl, and two adjacent radicals together may furthermore form a saturated or unsaturated cyclic group of 4 to 15 carbon atoms, or Si(R⁸)₃,
R⁸ is C₁-C₁₀-alkyl, C₃-C₁₀-cycloalkyl or C₆-C₁₅-aryl,
Z is X or 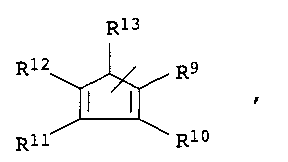
R⁹ to R¹³ are each hydrogen, C₁-C₁₀-alkyl, 5- to 7-membered cycloalkyl, which in turn may carry C₁-C₁₀-alkyl as a substituent, C₆-C₁₅-aryl or arylalkyl, and two adjacent radicals together may furthermore form a saturated or unsaturated cyclic group of 4 to 15 carbon atoms, or Si(R¹⁴)₃,
R¹⁴ is C₁-C₁₀-alkyl, C₆-C₁₅-aryl or C₃-C₁₀-cycloalkyl,
or R⁴ and Z together form a group -R¹⁵-A-, in which
R¹⁵ is 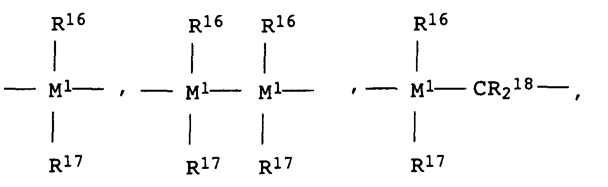 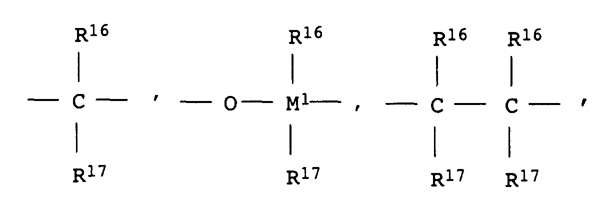
= BR¹⁶, = AlR¹⁶, -Ge-, -Sn-, -O-, -S-, = SO, = SO₂, = NR¹⁶, = CO, = PR¹⁶ or = P(O)R¹⁶,
where
R¹⁶, R¹⁷ and R¹⁸ are identical or different and are each hydrogen, halogen, C₁-C₁₀-alkyl, C₁-C₁₀-fluoroalkyl, C₆-C₁₀-fluoroaryl, C₆-C₁₀-aryl, C₁-C₁₀-alkoxy, C₂-C₁₀-alkenyl, C₇-C₄₀-arylalkyl, C₈-C₄₀-arylalkenyl or C₇-C₄₀-alkylaryl, or two adjacent radicals together with the atoms linking them in each case form a ring,
M¹ is silicon, germanium or tin,
A is ―O― ,―S―, 〉NR¹⁹ or 〉PR¹⁹
R¹⁹ is C₁-C₁₀-alkyl, C₆-C₁₅-aryl, C₃-C₁₀-cycloalkyl, alkylaryl or Si(R²⁰)₃,
R²⁰ is hydrogen, C₁-C₁₀-alkyl, C₆-C₁₅-aryl, which in turn may be substituted by C₁-C₄-alkyl, or C₃-C₁₀-cycloalkyl,
or where R⁴ and R⁸ together form a group -R¹⁵-,
and
B) a compound forming metallocenium ions.

5. A process as claimed in any of claims 1 to 4, wherein an open-chain or cyclic alumoxane compound of the formula II or III 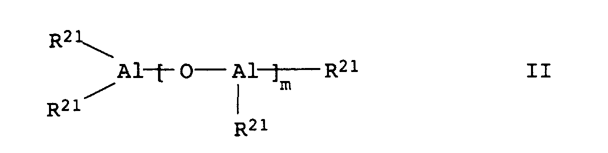 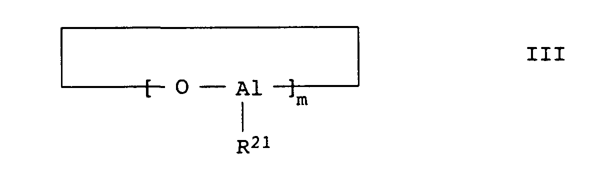 where
R²¹ is C₁-C₄-alkyl and m is an integer from 5 to 30,
is used as the compound B) forming metallocenium ions.

6. The use of a crystalline polymer prepared as claimed in any of claims 1 to 5 for the preparation of functionalized compounds.

7. The use as claimed in claim 6 for the preparation of epoxides.

## Revendications

1. Procédé de préparation de polymères cristallins à base d'éthylène, de propylène ou d'oléfines cycliques ou de leurs mélanges, dans lequel on polymérise en dispersion en présence de systèmes catalytiques à base de métallocène et on utilise, comme agent auxiliaire dispersant, des copolymères à deux blocs de styrène-diène ou des copolymères à trois blocs de styrène-diène-styrène.

2. Procédé suivant la revendication 1, caractérisé en ce qu'on prépare des homopolymères de l'éthylène ou du propylène.

3. Procédé suivant l'une des revendications 1 et 2, caractérisé en que, comme milieu de dispersion, on utilise des hydrocarbures aliphatiques.

4. Procédé suivant l'une des revendications 1 à 3, caractérisé en ce que, comme systèmes catalytiques à base de métallocène, on utilise ceux qui contiennent, comme composants actifs,
A) des complexes de métallocène de la formule générale I : 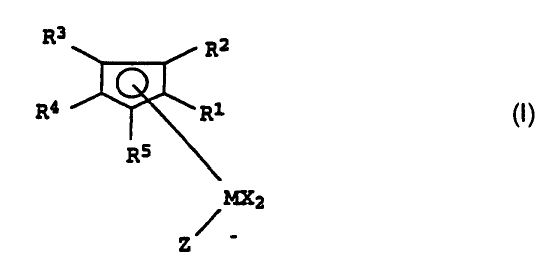 dans-laquelle les substituants ont la signification suivante :
M est du titane, du zirconium, de l'hafnium, du vanadium, du niobium ou du tantale,
X est du fluor, du chlore, du brome, de l'iode, de l'hydrogène, un alkyle en C₁-C₁₀, un aryle en C₆-C₁₅, un alkylaryle comportant 1 à 10 atomes de C dans le radical alkyle et 6 à 20 atomes de C dans le radical aryle, -OR⁶ ou -NR⁶R⁷,
où
R⁶ et R⁷ représentent un groupe alkyle en C₁-C₁₀, aryle en C₆-C₁₅, alkylaryle, arylalkyle, fluoroalkyle ou fluoroaryle comportant chaque fois 1 à 10 atomes de C dans le radical alkyle et 6 à 20 atomes de C dans le radical aryle,
R¹ à R⁵ représentent de l'hydrogène, un groupe alkyle en C₁-C₁₀, cycloalkyle hexagonal à heptagonal, qui peut à son tour porter un radical alkyle en C₁-C₁₀ comme substituant, un groupe aryle en C₆-C₁₅ ou un groupe arylalkyle, deux radicaux voisins pouvant éventuellement également former ensemble des groupes cycliques saturés ou insaturés présentant 4 à 15 atomes de C, ou Si(R⁸)₃, où
R⁸ représente un groupe alkyle en C₁-C₁₀, cycloalkyle en C₃-C₁₀ ou aryle en C₆-C₁₅,
Z représente X ou 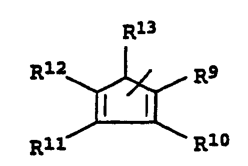 où les radicaux
R⁹ à R¹³ représentent de l'hydrogène, un groupe alkyle en C₁-C₁₀, cycloalkyle pentagonal à heptagonal, qui à son tour peut porter un alkyle en C₁-C₁₀ comme substituant, un groupe aryle en C₆-C₁₅ ou un groupe arylalkyle, deux radicaux voisins pouvant également éventuellement former ensemble des groupes cycliques saturés ou insaturés présentant 4 à 15 atomes de C, ou Si(R¹⁴)₃, où
R¹⁴ représente un groupe alkyle en C₁-C₁₀, aryle en C₆-C₁₆ ou cycloalkyle en C₃-C₁₀, les radicaux R⁴ et Z pouvant former conjointement un groupement -R¹⁵-A-, dans leauel
R¹⁵ représente 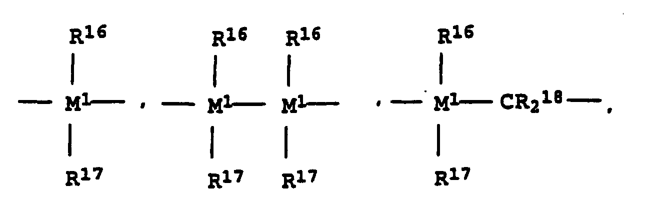 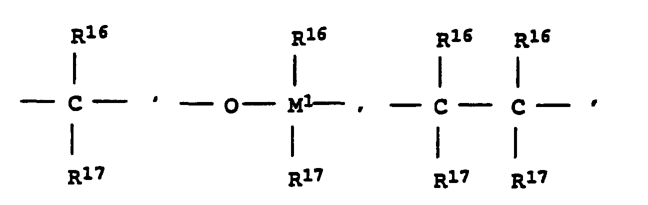
= BR¹⁶, = AIR¹⁶, -Ge-, -Sn-, -O-, -S-, = SO, = SO₂, = NR¹⁶, = CO, = PR¹⁶ ou = P(O)R¹⁶,
où
R¹⁶, R¹⁷ et R¹⁸ sont identiques ou différents et représentent un atome d'hydrogène, un atome d'halogène, un groupe alkyle en C₁-C₁₀, un groupe fluoroalkyle en C₁-C₁₀, un groupe fluoroaryle en C₆-C₁₀, un groupe aryle en C₆-C₁₀, un groupe alcoxy en C₁-C₁₀, un groupe alcényle en C₂-C₁₀, un groupe arylalkyle en C₇-C₄₀, un groupe arylalcényle en C₈-C₄₀ ou un groupe alkylaryle en C₇-C₄₀, deux radicaux voisins pouvant former un noyau avec les atomes qui les relient, et
M¹ est du silicium, du germanium ou de l'étain,
A représente ―O―, ―S―, 〉NR¹⁹ ou 〉PR¹⁹
où
R¹⁹ représente un groupe alkyle en C₁-C₁₀, aryle en C₆-C₁₅, cycloalkyle en C₃-C₁₀, alkylaryle ou Si(R²⁰)₃,
R²⁰ représente de l'hydrogène, un groupe alkyle en C₁-C₁₀, un groupe aryle en C₆-C₁₅, qui à son tour peut être substitué par des groupes alkyle en C₁-C₄, ou un groupe cycloalkyle en C₃-C₁₀,
les radicaux R⁴ et R⁸ pouvant former conjointement un groupement -R¹⁵-,
et
B) un composé générateur d'ions métallocénium.

5. Procédé suivant l'une des revendications 1 à 4, caractérisé en ce que, comme composé générateur d'ions métallocénium B), on met en oeuvre des composés d'alumoxane à chaîne ouverte ou cyclique de la formule générale II ou III : 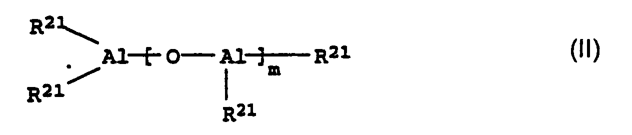 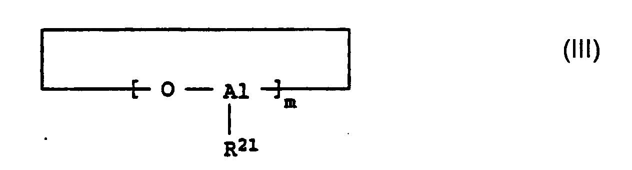 dans lesquelles
R²¹ représente un groupe alkyle en C₁-C₄ et m est un nombre entier de 5 à 30.

6. Utilisation des polymères cristallins préparés selon l'une des revendications 1 à 5, pour la fabrication de composés fonctionnalisés.

7. Utilisation suivant la revendication 6, pour la préparation d'époxydes.
